# EUROPEAN PATENT APPLICATION

(11) **EP 4 775 997 A1**
(43) Date of publication of application: **15.07.2026**
(21) Application number: 24862408.2
(22) Date of filing: 13.06.2024
(51) Int. Cl.: G01N 35/10

(54) **AUTOMATIC ANALYSIS DEVICE, DISPENSING NOZZLE CLEANING STATE DETERMINATION METHOD, AND PROGRAM**

(30) Priority: 06.09.2023 JP 2023144417
(71) Applicant: HITACHI HIGH-TECH CORPORATION, Tokyo 105-6409 (JP)
(72) Inventor: KITAGAWA, Fumihito, Tokyo 105-6409 (JP); IWASE, Yuichi, Tokyo 105-6409 (JP); FUKAYA, Masashi, Tokyo 105-6409 (JP)
(74) Representative: MERH-IP Matias Erny Reichl Hoffmann Patentanwälte PartG mbB
(86) International application number: PCT/JP2024/021462
(87) International publication number: WO 2025/052751

(57) **Abstract**

A state related to cleaning of a dispensing nozzle in an automatic analyzer can be determined in a shorter time. An automatic analyzer according to one embodiment of the invention includes a dispensing nozzle configured to aspirate and discharge a liquid; a cleaning unit configured to supply a probe cleaner onto an outer wall and into an interior of the dispensing nozzle; a capacitance measurement unit configured to measure capacitance between the dispensing nozzle and a reference potential portion; a control unit configured to control the dispensing nozzle and the cleaning unit; and a determination unit configured to execute a determination based on the measured capacitance. The capacitance measurement unit measures the capacitance over a time interval including a state where the cleaning unit is supplying the probe cleaner to the outer wall and the interior of the dispensing nozzle and the dispensing nozzle is discharging the aspirated liquid. The determination unit determines a state related to cleaning of the dispensing nozzle based on capacitance data representing the capacitance measured over the time interval.

## Description

### Technical Field

The present invention relates to an automatic analyzer, a dispensing nozzle cleaning state determination method, and a program.

### Background Art

There has been known an automatic analyzer that analyzes a liquid sample such as blood as a specimen. In the automatic analyzer, in order to prevent contamination of a specimen, a dispensing nozzle is cleaned using a detergent or water after each use. At this time, when the dispensing nozzle is not sufficiently cleaned, the analysis is adversely affected.

PTL 1 describes that, in order to determine whether a cleaning operation is sufficiently performed, an electrical physical quantity detected by a detection mechanism in a state where a nozzle is filled with system water (pure water) is compared with a reference value after performing internal cleaning of the nozzle, and a cleaning degree of the internal cleaning is determined based on a comparison result.

### Citation List

### Patent Literature

PTL 1: WO2015/115200

### Summary of Invention

### Technical Problem

However, the method described in PTL 1 focuses on the electrical physical quantity after the interior of the nozzle is cleaned with the system water, and therefore in order to determine whether the nozzle is sufficiently cleaned, it is necessary to repeat the dispensing operation a plurality of times until the system water is contaminated, which takes a relatively long time.

An object of the invention is to determine a state related to cleaning of a dispensing nozzle in an automatic analyzer in a shorter time.

### Solution to Problem

An automatic analyzer according to one embodiment of the invention includes a dispensing nozzle configured to aspirate and discharge a liquid; a cleaning unit configured to supply a probe cleaner onto an outer wall and into an interior of the dispensing nozzle; a capacitance measurement unit configured to measure capacitance between the dispensing nozzle and a reference potential portion; a control unit configured to control the dispensing nozzle and the cleaning unit; and a determination unit configured to execute a determination based on the measured capacitance. The capacitance measurement unit measures the capacitance over a time interval including a state where the cleaning unit is supplying the probe cleaner to the outer wall and the interior of the dispensing nozzle and the dispensing nozzle is discharging the aspirated liquid. The determination unit determines a state related to cleaning of the dispensing nozzle based on capacitance data representing the capacitance measured over the time interval.

### Advantageous Effects of Invention

According to the embodiment of the invention, a state related to cleaning of a dispensing nozzle in an automatic analyzer can be determined in a shorter time.

### Brief Description of Drawings

[FIG. 1] FIG. 1 is a diagram illustrating an example of a configuration of an automatic analyzer according to Embodiment 1.
[FIG. 2] FIG. 2 is a diagram illustrating a method for acquiring a change amount of a capacitance value using a liquid level detection sensor.
[FIG. 3] FIG. 3 is a diagram illustrating a general dispensing nozzle cleaning operation.
[FIG. 4] FIG. 4 is a diagram illustrating an example of a temporal change of capacitance during cleaning of a dispensing nozzle using water.
[FIG. 5] FIG. 5 is a diagram illustrating an example of a temporal change of capacitance during cleaning of the dispensing nozzle using a detergent and water.
[FIG. 6] FIG. 6 is a flowchart illustrating an example of a flow of processing of detecting a flow path abnormality.
[FIG. 7] FIG. 7 is a flowchart illustrating an example of a flow of processing of determining whether the cleaning of the dispensing nozzle using the detergent is normally performed.
[FIG. 8] FIG. 8 is a flowchart illustrating an example of a flow of processing of determining whether the cleaning of the dispensing nozzle using the water is normally performed.
[FIG. 9] FIG. 9 is a diagram illustrating an example of a plurality of set thresholds.
[FIG. 10] FIG. 10 is a diagram illustrating an example of a flow path configuration of a dispensing mechanism.
[FIG. 11] FIG. 11 is a diagram illustrating an example of a capacitance signal when internal cleaning is performed by syringe discharging during a dispensing nozzle cleaning operation after the detergent is aspirated.

### Description of Embodiments

### <History of Study Performed by Inventors>

In order to facilitate understanding of embodiments of the invention, prior to describing the embodiments, the background of studies by the present inventors will be described in detail.

In an automatic analyzer using a liquid sample such as blood as a specimen, a used reaction container or dispensing nozzle (also referred to as a probe or a nozzle) is cleaned using a probe cleaner. In the cleaning, a detergent having an appropriate concentration, water, or the like is used as the probe cleaner. In this case, cleaning with an appropriate probe cleaner and reliable removal of the probe cleaner in the reaction container and the dispensing nozzle lead to improvement in reliability of an analysis result.

As described above, when the dispensing nozzle is cleaned with the detergent, it is necessary to sufficiently clean away a detergent component adhering to the dispensing nozzle in order to prevent the influence on the analysis result of a specimen. When the detergent is not removed from the dispensing nozzle (when the dispensing nozzle is contaminated), it is necessary to perform cleaning or the like using system water again to prevent the influence on the analysis result of the specimen.

On the other hand, in recent years, automatic analyzers have become more modular and offer higher throughput, and as a result, cleaning capabilities required of the automatic analyzers are becoming increasingly higher in order to prevent accumulation of contamination of specimens and reagents (sometimes called carryover). Along with this, a location where a detergent is used and a cleaning method are diversified, such as cleaning a dispensing nozzle by emitting ultrasonic waves during cleaning, and newly providing an ultrasonic cleaning mechanism. In addition, in order to prevent precipitation of a detergent component due to evaporation at the location where the detergent is used, the detergent component may be temporarily replaced with water, and it is necessary to determine whether a detergent having a sufficient concentration is delivered during cleaning.

In other words, it is considered necessary for an automatic analyzer to have a method for determining whether an appropriate detergent is normally delivered to each cleaning mechanism and whether cleaning is performed with a type and a concentration of the appropriate detergent, and whether the detergent used in cleaning is sufficiently removed from the dispensing nozzle.

Under such a background, PTL 1 (paragraph 0035, and the like) describes that, in order to determine whether a cleaning operation is sufficiently performed, "an electrical physical quantity detected by a detection mechanism in a state where a nozzle is filled with system water (pure water) is compared with a reference value after performing internal cleaning of the nozzle, and a cleaning degree of the internal cleaning is determined based on a comparison result".

According to Example 2 described in PTL 1, contamination of an interior of a probe, that is, insufficient cleaning is determined by measuring an electrical physical quantity of system water filled in the probe (dispensing nozzle).

However, this method focuses on the electrical physical quantity after the interior of the dispensing nozzle is cleaned with system water, and therefore it is necessary to repeat the dispensing operation a plurality of times until the system water is contaminated, which increases the number of cycles used for determination and results in a slower processing speed. Whether the probe cleaner used in the cleaning is a detergent cannot be determined.

Under these circumstances, an object of the invention, that is, a problem to be solved is to determine a state related to cleaning of a dispensing nozzle in an automatic analyzer in a shorter time.

Here, as one aspect for solving the above problem, there is provided an automatic analyzer including a dispensing nozzle configured to aspirate a liquid, a cleaning mechanism configured to clean the dispensing nozzle, and a liquid level detection sensor configured to measure capacitance between a tip end of the dispensing nozzle and a reference potential portion and output a capacitance signal. The automatic analyzer determines a state of a probe cleaner used in cleaning by determining an electrical property of the liquid in the interior of the dispensing nozzle based on a change in capacitance signal during cleaning of the dispensing nozzle with the cleaning mechanism.

### (Embodiment 1)

### <Configuration of Automatic Analyzer>

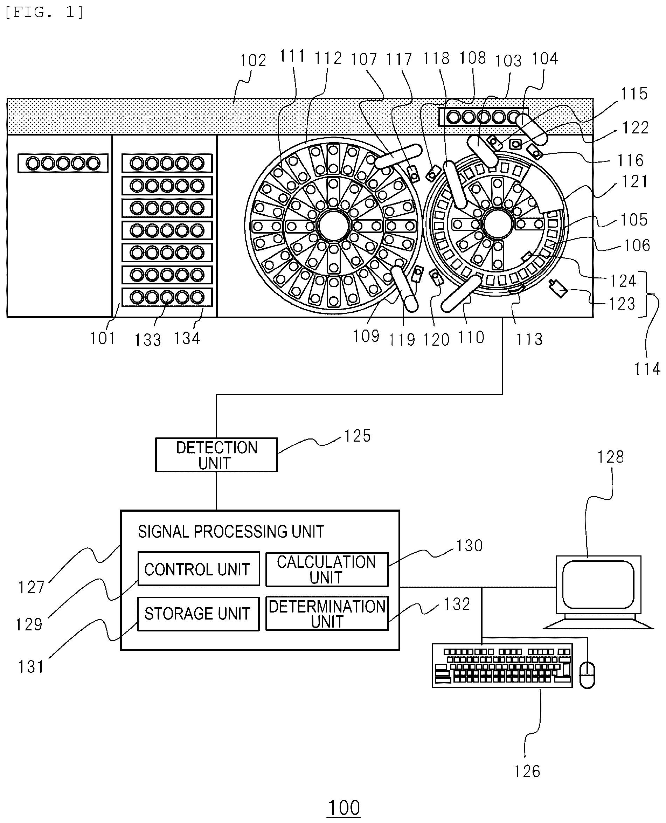

FIG. 1 is a diagram illustrating an example of a configuration of an automatic analyzer according to Embodiment 1. As illustrated in FIG. 1, an automatic analyzer 100 according to Embodiment 1 includes, as main components, a specimen inlet 101, a conveyance line 102, specimen dispensing mechanisms 103 and 104, a reaction disk 105, reaction containers 106 disposed concentrically therewith, reagent dispensing mechanisms 107, 108, 109, and 110, a circular reagent disk 112 on which reagent bottles 111 containing reagents are disposed, a stirring mechanism 113, a photometry mechanism 114, specimen dispensing nozzle cleaning mechanisms 115 and 116, a reagent dispensing nozzle cleaning mechanism 117, 118, 119, and 120, a reaction container cleaning mechanism 121, and an ultrasonic cleaning mechanism 122. Note that the various cleaning mechanisms described above are examples of a "cleaning unit" in the present application.

The photometry mechanism 114 includes a light source 123 and a photodetector 124. The specimen dispensing nozzle cleaning mechanisms 115 and 116 and the reagent dispensing nozzle cleaning mechanisms 117 to 120 are installed within operation ranges of the specimen dispensing mechanisms 103 and 104 and the reagent dispensing mechanism 107, 108, 109, and 110.

The automatic analyzer 100 includes a detection unit 125 that detects an operation state of each mechanism. The detection unit 125 includes various sensors. The detection unit 125 is an example of a "capacitance measurement unit" in the present application. The automatic analyzer 100 includes an input unit 126 and an output unit 128. The input unit 126 includes a keyboard, a mouse, a touch panel, a voice input unit, and the like, and a user uses these units to input measurement items and measurement conditions. The output unit 128 includes a display monitor or the like, and displays an operation content and an analysis result to the user by a graphical user interface (GUI) or the like.

The automatic analyzer 100 includes a signal processing unit 127 that processes a signal such as input data and output data. The signal processing unit 127 is electrically connected to the detection unit 125, the input unit 126, and the output unit 128. The signal processing unit 127 includes a control unit 129, a calculation unit 130, a storage unit 131, and a determination unit 132. The control unit 129 controls an operation of each mechanism according to the input. The calculation unit 130 performs a calculation based on photometric data obtained by the photometry mechanism 114 and various signals. The storage unit 131 stores data necessary for the calculation, data obtained by the calculation, a program, and the like. The determination unit 132 performs various determinations by threshold value determination or the like. The control unit 129 is an example of a "control unit" in the present application. The determination unit 132 is an example of a "determination unit" in the present application.

The signal processing unit 127 includes, for example, a computer. In this case, the computer includes one or more processors such as a calculation processing device (CPU, MPU), a microcontroller (MCU), and an image processing device (GPU), and these processors execute the program stored in the storage unit 131 to function as each unit such as the control unit 129, the calculation unit 130, and the determination unit 132.

### <Outline of Flow of Analysis by Automatic Analyzer>

An analysis by the automatic analyzer 100 is mainly executed as follows. An operator places a dedicated rack 134 in the specimen inlet 101, which can store specimen containers 133 such as a blood collection tube vertically. The specimen container 133 contains a specimen such as blood used for analysis. The operator inputs a measurement content to the automatic analyzer 100 using the input unit 126 to start the operation.

When the operation is started, the control unit 129 transmits an operation instruction to each mechanism. Upon receiving the operation instruction, each mechanism performs an analysis operation preparation such as reaction cell cleaning and mechanism abnormality confirmation. Once the analysis preparation operation is performed, the analysis operation is then started, and the rack 134 placed in specimen inlet 101 is automatically transferred to the conveyance line 102. The rack 134 transferred to the conveyance line is transferred to a specimen aspiration position via a belt on the conveyance line.

When the rack 134 is transferred to the specimen aspiration position, motors of drive units of the specimen dispensing mechanisms 103 and 104 rotate according to an instruction of the control unit 129, and specimen dispensing nozzles of the specimen dispensing mechanisms 103 and 104 move from a position of the specimen dispensing nozzle cleaning mechanism 115 to the specimen aspiration position. The specimen dispensing mechanisms 103 and 104 start a lowering operation of the specimen dispensing nozzles moved to the specimen aspiration position. When the liquid level detection sensor detects that the specimen dispensing nozzles come into contact with the specimens in the specimen containers 133 transferred in advance, the specimen dispensing mechanisms 103 and 104 stop the lowering operation of the specimen dispensing nozzles. The specimen dispensing mechanisms 103 and 104 causes the specimen dispensing nozzles to aspirate the specimens in an amount necessary for analysis, and vertically raise the specimens while holding the specimens in the specimen dispensing nozzles.

The specimen dispensing mechanisms 103 and 104 move the specimen dispensing nozzles to positions of the specimen dispensing nozzle cleaning mechanisms 115 and 116, then move the specimen dispensing nozzles to upper portions of the reaction containers 106 for performing a chemical reaction, lower the specimen dispensing nozzles to bottoms of the reaction containers 106, and then discharge the specimens. After the specimen is discharged from the specimen dispensing nozzle to the reaction container 106, the specimen dispensing mechanism 103 vertically raises the specimen dispensing nozzle and moves the specimen dispensing nozzle to the position of the specimen dispensing nozzle cleaning mechanism 115 by rotation of the motor, thereby ending the specimen dispensing operation.

The reaction container 106 containing the specimen moves to a reagent dispensing position as the reaction disk 105 rotates. The reagent dispensing mechanisms 107 to 110 cause reagent dispensing nozzles to aspirate reagents corresponding to items to be used in analysis from reagent bottles 111 and discharge the reagents into the reaction container 106 containing the specimen. After the reagents are discharged into the reaction container 106, the reagent dispensing mechanisms 107 to 110 move the reagent dispensing nozzles to positions of the reagent dispensing nozzle cleaning mechanisms 117 to 120 by rotation of motors, and the reagent dispensing operation ends.

When performing the reagent dispensing operation, the reagent dispensing mechanisms 107 to 110 confirm whether there is an abnormality in amount of the reagent inside the reagent bottle 111 by detecting with the liquid level detection sensor that the reagent dispensing nozzle comes into contact with a liquid level inside the reagent bottle 111. The dispensing mechanisms (which refer to the specimen dispensing mechanisms 103 and 104 and the reagent dispensing mechanisms 107 to 110; the same applies below) have pressure sensors that monitor a pressure in flow paths and determine whether the dispensing operation is normally performed. The specimen dispensing mechanisms 103 and 104 and the reagent dispensing mechanisms 107 to 110 perform the above-described specimen dispensing operation and reagent dispensing operation in different cycles, thereby improving processing capacity.

A reaction liquid containing the specimen and the reagent that are dispensed into the reaction container 106 by the above operations is stirred by the stirring mechanism 113 to cause a chemical reaction, and optical characteristics such as absorbance change. The optical characteristics of the reaction liquid are measured by detecting light derived from the light source 123 by the photodetector 124 when the reaction container 106 passes through the photometry mechanism 114 with the rotation of the reaction disk 105. Data obtained by the photometry mechanism 114 is sent to the calculation unit 130, and the calculation unit 130 calculates a concentration of an analysis item component contained in the specimen and outputs a calculation result to the output unit 128.

The used reaction container 106 and dispensing nozzles of the dispensing mechanisms are cleaned with a probe cleaner by the reaction container cleaning mechanism 121 and the dispensing nozzle cleaning mechanisms 115 to 120, and are repeatedly used for the next analysis while maintaining analysis performance. The dispensing nozzle cleaning mechanisms 115 to 120 mainly perform internal cleaning to clean an interior of the dispensing nozzle by discharging system water at high pressure, and external cleaning to clean an outer wall of the dispensing nozzle by supplying system water. When performing a measurement item that is susceptible to carryover, the dispensing nozzles are cleaned with the dispensing nozzle cleaning mechanisms 115 to 120 after a detergent is aspirated into the dispensing nozzles, thereby removing contamination of the dispensing nozzles. The detergent used in cleaning varies depending on a type of contamination, and is used at various dilution rates.

In addition to cleaning with the above-described dispensing nozzle cleaning mechanisms 115 to 120, the dispensing nozzles of the dispensing mechanisms can be cleaned with the ultrasonic cleaning mechanism 122 provided separately from the dispensing nozzle cleaning mechanisms 115 to 120 in response to a maintenance instruction from a user or at any timing during operation in order to prevent carryover and accumulation of dirt. With the ultrasonic cleaning mechanism 122, the dispensing nozzles are irradiated with ultrasonic waves in addition to the aspiration of the detergent. Thereafter, the internal cleaning and the external cleaning are performed by the dispensing nozzle cleaning mechanisms 115 to 120 to remove contamination. In the ultrasonic cleaning mechanism 122, in order to prevent deterioration of the flow path and crystallization of the detergent component, an ultrasonic cleaning tank is replaced with pure water during device standby, and is replaced with a detergent when cleaning is performed.

In each cleaning mechanism including the ultrasonic cleaning tank, when a detergent having an expected concentration is not delivered, cleaning becomes insufficient, and analysis performance deteriorates. There may be an abnormality in the mechanism or flow path that delivers the detergent to each cleaning mechanism.

Therefore, the automatic analyzer 100 according to the present embodiment detects an electrical property (conductivity) of the liquid aspirated by the dispensing nozzle by detecting an electrical physical quantity that changes according to a property of the liquid discharged from a tip end of the dispensing nozzle during cleaning by the dispensing nozzle cleaning mechanism. Accordingly, the automatic analyzer 100 determines whether the detergent used in the cleaning is appropriate, whether the detergent is removed, and whether there is any abnormality in the liquid delivery mechanism or flow path. Here, the electrical physical quantity is a voltage value, a capacitance value, or the like. In the present example, the electrical property of the liquid aspirated by the dispensing nozzle is detected using the capacitance value acquired by the liquid level detection sensor.

Here, a method for acquiring a change amount of the capacitance value using the liquid level detection sensor will be described with reference to the drawings.

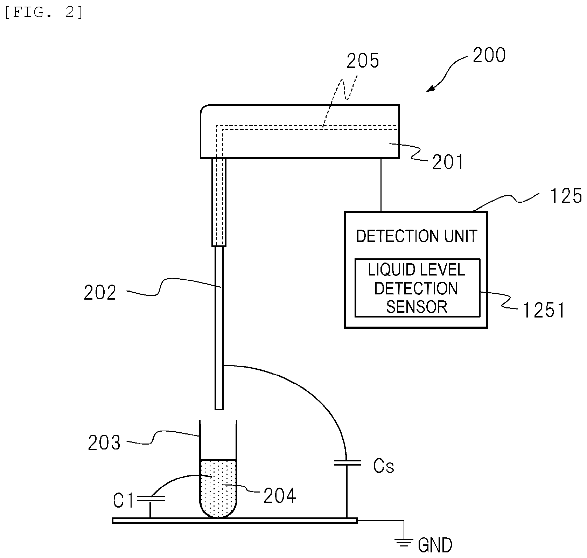

FIG. 2 is a diagram illustrating the method for acquiring the change amount of the capacitance value using the liquid level detection sensor. A dispensing mechanism 200 illustrated in FIG. 2 corresponds to the specimen dispensing mechanisms 103 and 104 and the reagent dispensing mechanisms 107 to 110 illustrated in FIG. 1. As illustrated in FIG. 2, the dispensing mechanism 200 is connected to the detection unit 125 that detects states of a dispensing nozzle 202 and a flow path 205. As described above, the detection unit 125 includes a liquid level detection sensor 1251. The liquid level detection sensor 1251 is, for example, a capacitance type sensor, and may be stored inside an arm 201 for the purpose of space saving.

The liquid level detection sensor 1251 measures capacitance Cs (hereinafter, a capacitance signal or a capacitance signal value may be represented by a symbol Cs) between a tip end of the dispensing nozzle 202 and a reference potential portion. The reference potential portion is, for example, a GND level portion of a housing. After the tip end of the dispensing nozzle 202 comes into contact with a specimen 204 in a container 203 corresponding to the specimen container 133 or the like, the capacitance signal Cs becomes capacitance Cs = C1, and the contact between the dispensing nozzle 202 and the specimen 204 is detected based on a change in capacitance Cs.

Next, a general dispensing nozzle cleaning operation will be described with reference to the drawings.

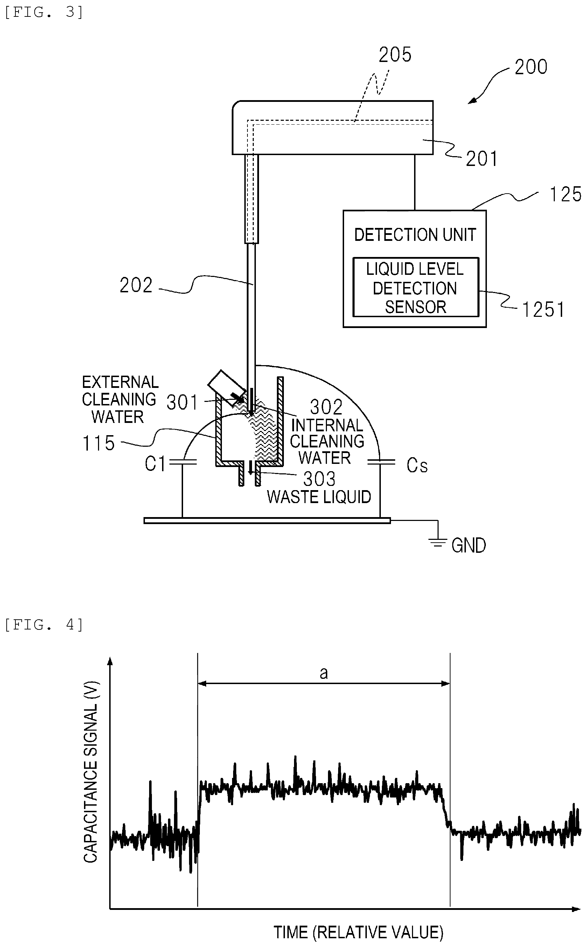

FIG. 3 is a diagram illustrating the general dispensing nozzle cleaning operation. As illustrated in FIG. 3, the dispensing mechanism 200 of the dispensing nozzle 202 moved to the position of the dispensing nozzle cleaning mechanism 115 performs an internal cleaning operation of cleaning an interior, that is, an inner wall of the dispensing nozzle 202 by discharging system water (internal cleaning water) 302 from the dispensing nozzle 202 through the flow path 205 at high pressure. In addition, the dispensing mechanism 200 performs an external cleaning operation of cleaning an exterior, that is, an outer wall of the dispensing nozzle 202 with system water (external cleaning water) 301 discharged by the dispensing nozzle cleaning mechanism 115 and supplied to the outer wall of the dispensing nozzle 202. For the purpose of preventing scattering of water from the dispensing nozzle cleaning mechanism 115 and shortening a cleaning cycle, the internal cleaning is performed during the external cleaning operation.

As described above, when dispensing an analysis item that is susceptible to carryover or when an abnormality in the dispensing nozzle 202 is detected, the dispensing nozzle 202 may be cleaned with a detergent. In this case, the dispensing mechanism 200 cleans the dispensing nozzle 202 with a detergent by aspirating the detergent delivered to a cleaning tank such as an ultrasonic cleaning tank with the dispensing nozzle 202, the dispensing mechanism 200 performs the internal cleaning in the cleaning tank, and at the same time, the dispensing nozzle cleaning mechanism 115 performs the external cleaning in the cleaning tank, thereby removing the detergent from the dispensing nozzle 202.

FIG. 4 is a diagram illustrating an example of a temporal change of capacitance during cleaning of the dispensing nozzle using water. FIG. 4 illustrates data of the capacitance signal (hereinafter, also referred to as capacitance data) obtained by converting a temporal change of capacitance of the dispensing nozzle 202 that is acquired by the liquid level detection sensor 1251 into a voltage signal which is an analog signal when the dispensing nozzle 202 is cleaned with water by the dispensing nozzle cleaning mechanism 115. As described above, the measured capacitance is capacitance between the dispensing nozzle 202 and the GND level, and the detection unit 125 or the dispensing mechanism 200 incorporates a circuit in which an output voltage increases as capacitance on the dispensing nozzle 202 side increases.

In FIG. 4, a time interval a corresponds to a period during which cleaning is being performed, and in the interval a, the internal cleaning and the external cleaning of the dispensing nozzle 202 is performed as described above. When the outer wall of the dispensing nozzle 202 comes into contact with the external cleaning water 301, the capacitance of the dispensing nozzle 202 increases, and thus the capacitance signal also increases. When the liquid discharged by the internal cleaning is system water (pure water), conductivity of the external cleaning water with which the outer wall near a tip end of the dispensing nozzle 202 comes into contact does not change. Therefore, as illustrated in FIG. 4, the capacitance signal of the dispensing nozzle 202 during the cleaning remains substantially constant.

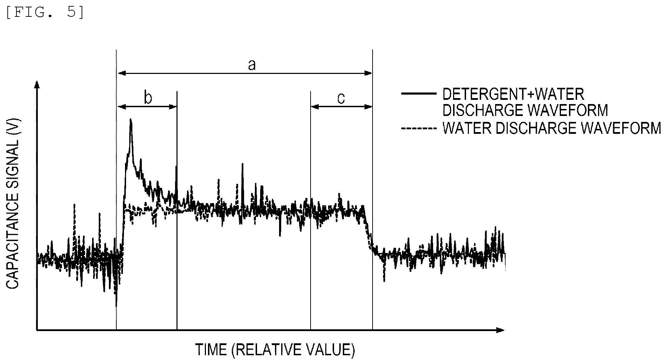

FIG. 5 is a diagram illustrating an example of a temporal change of capacitance during cleaning of the dispensing nozzle using a detergent and water. FIG. 5 illustrates data of a capacitance signal obtained by converting a temporal change of capacitance of the dispensing nozzle 202 that is acquired by the liquid level detection sensor 1251 into a voltage signal when the dispensing nozzle cleaning mechanism 115 performs cleaning with water after the dispensing nozzle 202 aspirates the detergent.

When the dispensing nozzle 202 is cleaned with a liquid such as water after aspirating the detergent, the liquid discharged by the internal cleaning contains the detergent. Generally, the detergent contains abundant ions. Therefore, conductivity of the outer wall near the tip end of the dispensing nozzle 202 temporarily increases due to the contact with the external cleaning water and the internal cleaning water containing the detergent. Accordingly, the capacitance signal temporarily increases, and a peak specific to the use of the detergent, that is, a spike signal appears in the temporal change of the capacitance signal.

For example, as illustrated in FIG. 5, when focusing on the capacitance signal in the interval a during the cleaning in which the external cleaning water and the internal cleaning water are supplied almost simultaneously, the peak specific to the use of the detergent is seen in an initial interval b of the interval a. As the detergent component is discharged, the capacitance signal decreases, and as the discharging of the detergent component is completed, a state of overlapping with a capacitance signal when system water is discharged can be seen in a final interval c of the interval a during the cleaning. The intervals a, b, and c are assumed to be, for example, about 500 milliseconds, 150 milliseconds, and 150 milliseconds, respectively.

Therefore, by measuring the capacitance data during the cleaning of the dispensing nozzle 202 of the specimen dispensing mechanism 103 and 104 by the dispensing nozzle cleaning mechanisms 115 and 116, whether the liquid aspirated by the dispensing nozzle 202 is a detergent can be determined.

For example, the signal processing unit 127 analyzes a change in capacitance signal in the time interval a during the cleaning of the dispensing nozzle 202, and calculates the maximum value of the capacitance signal in the initial interval b of the interval a. The signal processing unit 127 compares the calculated maximum value of the capacitance signal with a reference capacitance signal stored in the storage unit 131 in advance, for example, a maximum value of a signal in the interval b after pure water is aspirated, thereby determining whether the aspirated liquid is a detergent having an expected concentration.

In the present method, since electrical characteristics of the specimen aspirated by the dispensing nozzle 202 can be directly measured, a type, a concentration, and the like of the aspirated liquid can be determined only by performing the cleaning operation of the dispensing nozzle 202 once after the dispensing nozzle 202 aspirates the specimen or the detergent. Since the cleaning by the dispensing nozzle cleaning mechanisms 115 and 116 is incorporated in the analysis cycle in advance, the above determination can be made without reducing throughput.

The capacitance signal in the interval b changes depending on a type of the detergent aspirated by the dispensing nozzle, a detergent concentration, and a detergent volume. Therefore, by storing in advance, in the storage unit 131, a capacitance signal when a detergent is used in a specific cleaning operation, not only whether the cleaning is normally performed using the detergent having an appropriate concentration, but also whether there is an abnormality in the detergent supply at various locations where the detergent is used can be determined without reducing throughput.

For example, when the capacitance signal obtained during cleaning the dispensing nozzle 202 after aspirating the liquid deviates from the capacitance signal obtained during cleaning with an appropriate detergent concentration stored in the storage unit 131, an abnormality in a detergent flow path or a detergent supply device can be detected.

For example, when there is an abnormality in a dilution flow path and dilution of the detergent cannot be sufficiently performed, a detergent concentration used for cleaning increases. Therefore, the maximum value of the capacitance signal of the dispensing nozzle 202 is higher than the maximum value of the capacitance signal when cleaning is performed at an appropriate detergent concentration stored in the storage unit 131.

On the other hand, when the abnormality occurs on the detergent supply flow path and the detergent cannot be sufficiently delivered, the detergent concentration used for cleaning is low. Therefore, the maximum value of the capacitance signal of the dispensing nozzle 202 is lower than the maximum value of the capacitance signal when cleaning is performed at an appropriate detergent concentration stored in the storage unit 131.

As described above, by comparing the maximum value of the capacitance signal represented by the acquired capacitance data with a specific value of the capacitance signal when cleaning is performed under an appropriate condition or a reference condition stored in advance, the flow path abnormality can be easily determined. When there is a circuit in which the voltage decreases as the capacitance value of the dispensing nozzle 202 increases, a change amount of the voltage changes to a negative side.

By using the determination reference as described above, the flow path abnormality at various locations of the automatic analyzer 100 can be detected.

For example, it is assumed that the cleaning mechanism cleans the dispensing nozzle 202 in the cleaning tank after the liquid in the reaction container 106 is aspirated by the dispensing nozzle 202. In this case, by acquiring and analyzing the capacitance data of the dispensing nozzle 202 during the cleaning, an abnormality in the flow path for supplying the detergent and the system water to the reaction container 106 can be detected.

For example, it is assumed that the cleaning mechanism cleans the dispensing nozzle 202 in the cleaning tank after the liquid supplied to the cleaning tank of the ultrasonic cleaning mechanism 122 is aspirated by the dispensing nozzle 202. In this case, by acquiring and analyzing the capacitance data of the dispensing nozzle 202 during the cleaning, an abnormality of the liquid delivery mechanism to the cleaning tank of the ultrasonic cleaning mechanism 122 can be detected by determining whether the detergent is supplied to the cleaning tank of the ultrasonic cleaning mechanism 122 and whether the detergent does not remain when the cleaning tank is replaced with water.

In this way, a flow path abnormality at a location accessible by the dispensing nozzle 202 of the dispensing mechanism 200 can be detected. The automatic analyzer 100 may be configured to output an alarm when a flow path abnormality is detected, to prompt the user to confirm the flow path where the abnormality is suspected. In this way, for example, the number of visits by a service technician can be reduced, the burden on the service technician can be reduced, and an operation stop time of the automatic analyzer 100 can be shortened.

### <Flow of Processing of Detecting Flow Path Abnormality>

Here, a flow of processing of detecting a flow path abnormality based on the capacitance signal of the dispensing nozzle will be described.

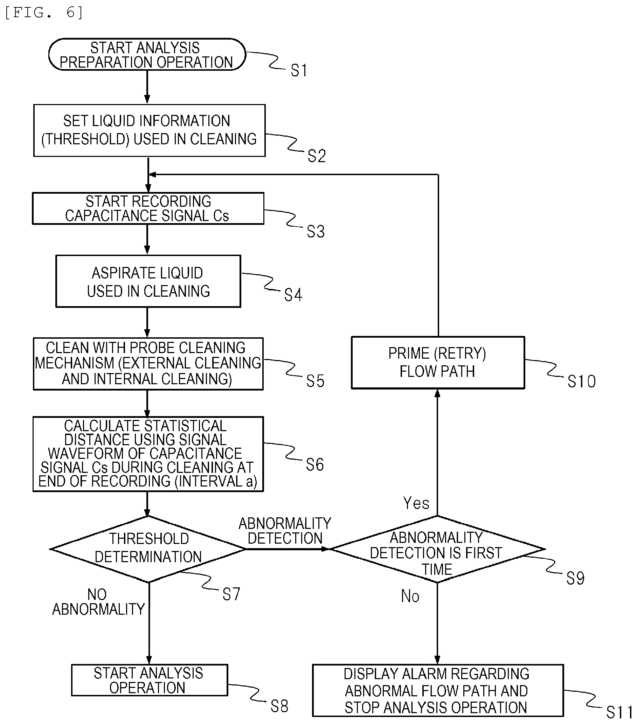

FIG. 6 is a flowchart illustrating an example of the flow of the processing of detecting a flow path abnormality. It is desirable to detect a flow path abnormality during the analysis preparation operation that is performed immediately after the start of operation. When the analysis preparation operation is started (S1), the control unit 129 sets liquid information (a reference capacitance signal threshold) to be used in a mechanism subject to flow path abnormality detection (S2), and starts recording the capacitance signal Cs detected by the liquid level detection sensor 1251 of the detection unit 125 (S3). Thereafter, after receiving a command from the control unit 129, the dispensing mechanism aspirates a liquid used for cleaning (S4), and the dispensing nozzle cleaning mechanism cleans the dispensing nozzle 202 (S5).

When the cleaning ends, the control unit 129 ends the recording of the capacitance signal Cs. That is, the liquid level detection sensor 1251 of the detection unit 125 detects and measures capacitance over a time interval including a state where the dispensing cleaning mechanism is supplying the probe cleaner to the outer wall and the interior of the dispensing nozzle 202 and the dispensing nozzle 202 is discharging the aspirated liquid.

Then, the calculation unit 130 calculates a statistical distance using a waveform of the capacitance signal during cleaning the dispensing nozzle 202 (S6). The determination unit 132 executes a determination based on the measured capacitance. That is, the determination unit 132 determines a state related to the cleaning of the dispensing nozzle 202 based on capacitance data representing the capacitance measured over the time interval. In the present example, the determination unit 132 determines the presence or absence of an abnormality by comparing the calculated statistical distance of the capacitance signal with the capacitance signal threshold set in S2 (S7). When it is determined that there is no abnormality (S7: no abnormality), the control unit 129 continues the analysis operation as it is (S8). On the other hand, when it is determined that there is an abnormality (S7: abnormality), the control unit 129 causes the storage unit 131 to store the number of times it is determined that there is an abnormality, that is, the number of times of abnormality detection.

The determination unit 132 determines whether the current abnormality detection is a first time (S9). When the abnormality detection is the first time (S9: Yes), the control unit 129 controls each mechanism to prime (retry) the corresponding flow path (S10). This prevents a flow path system from being determined as abnormal even when there is no abnormality, such as air bubbles accidentally getting mixed into the flow path. After the retry, steps S3 to S6 are performed again, that is, the aspiration of the liquid by the dispensing nozzle 202, the cleaning of the dispensing nozzle 202, and the acquisition of the capacitance data during the cleaning of the dispensing nozzle 202 are performed.

When the abnormality is detected again in the threshold determination in step S7 (S7: abnormality) and the abnormality detection is a second time (S9: No), the control unit 129 causes the output unit 128 to output an alarm regarding the abnormal flow path and stops the analysis operation (S11).

The flowchart described above is an example, and a response after the abnormality determination differs depending on the configuration of the automatic analyzer 100. For example, when the concentration of the detergent used in cleaning can be adjusted using a proportional solenoid valve or the like, even when an abnormality is detected, there may be no abnormality in the flow path and an opening rate of the proportional solenoid valve may not be appropriate. Therefore, when the abnormality detection is the second time in the flowchart, an operation of adjusting the detergent concentration by increasing or decreasing the opening rate of the proportional solenoid valve may be performed, and the determination may be performed again. For example, when it is desired to further increase the detergent concentration, the opening rate of the proportional solenoid valve on the detergent side is increased, or the opening rate of the proportional solenoid valve on the dilution side is decreased. Conversely, when it is desired to further lower the detergent concentration, the opening rate of the proportional solenoid valve on the detergent side is decreased or the opening rate of the proportional solenoid valve on the dilution side is increased. A timing of starting recording of the capacitance signal is any, as long as the capacitance data during the cleaning by the dispensing nozzle cleaning mechanism, which is used for the determination, can be obtained.

Based on the capacitance data during the cleaning by the dispensing nozzle cleaning mechanism, whether the detergent in the interior of the dispensing nozzle is removed by the cleaning can also be determined. For example, the maximum value of the capacitance signal in the interval c immediately before the end of cleaning is compared with a reference capacitance signal stored in advance. When the detergent in the interior of the dispensing nozzle cannot be completely removed by the internal cleaning, the signal deviates from the reference capacitance signal, and thus whether the internal cleaning of the dispensing nozzle is sufficient can be determined. When the cleaning is insufficient, the influence on the analysis result can be minimized by giving a data alarm and performing cleaning again.

By using the above determination reference, whether the cleaning is appropriately performed at various locations accessible by the dispensing nozzle and the detergent is sufficiently removed can be determined. As an example, a case of the reaction container will be described.

After the reaction is completed, the reaction container is cleaned by removing the reaction liquid and then discharging an alkaline or acidic detergent from a rinsing mechanism. After the liquid is aspirated using the dispensing nozzle from the reaction container into which the detergent is discharged, the dispensing nozzle is moved to the cleaning tank and a dispensing nozzle cleaning operation is performed. By focusing on the interval b of the capacitance signal, whether the detergent discharged into the reaction container is of an appropriate concentration can be determined. The detergent in the reaction container is removed by the rinsing mechanism and cleaned a plurality of times using system water. Whether the detergent is removed can be determined by aspirating the liquid from the reaction container filled with the system water by the dispensing nozzle, measuring the capacitance signal in the above procedure, and focusing on the interval c.

Since the remaining detergent component affects the analysis performance, when it is determined that the detergent is not sufficiently removed, the reaction container can be discontinued for analysis, thereby reducing waste of the specimen and the reagent.

When making the above determination, a comparison of the capacitance signals is not limited to a comparison using the maximum value in a specific interval during the cleaning, and a discriminant model may be created using various statistical methods or machine learning, and a comparison may be made. For example, in order to reduce the electrical noise influence, a comparison using an integral value in a specific interval, a comparison using a Mahalanobis distance or a statistical distance such as a k-average method by extracting any feature variable from a specific interval of the capacitance signal, a comparison using a differential amount focusing on a change amount of the capacitance signal, or the like may be performed.

A plurality of thresholds used in the determination may be set. For example, a first threshold and a second threshold can be set for a change in capacitance in the interval c, and subsequent behavior can be changed depending on the determination threshold, such as performing additional cleaning using a probe cleaning mechanism when the first threshold is exceeded, and performing ultrasonic cleaning when the second threshold is exceeded.

### <Flow of Processing of Determining Whether Cleaning of Dispensing Nozzle Using Detergent is Normally Performed>

Here, a flow of processing of determining, based on the capacitance signal of the dispensing nozzle 202, whether the cleaning of the dispensing nozzle 202 using the detergent is normally performed will be described.

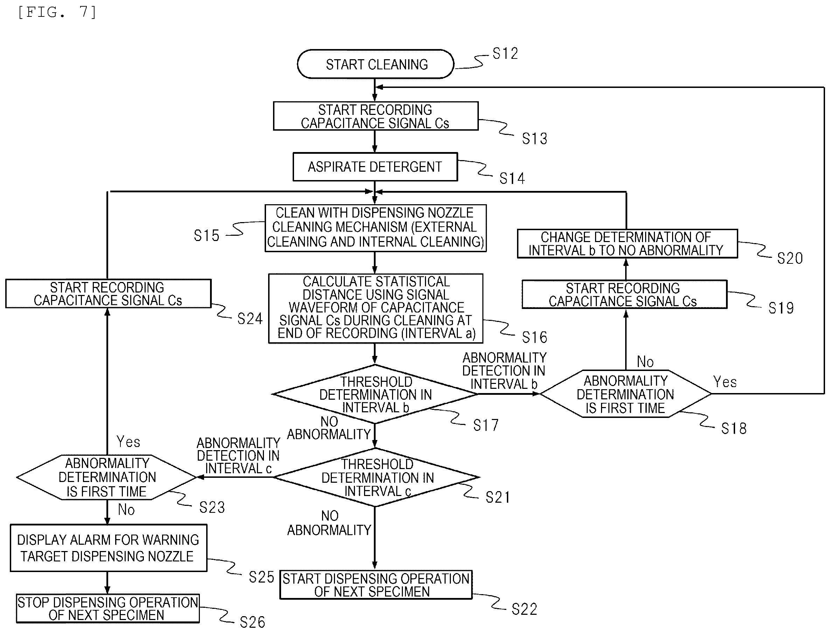

FIG. 7 is a flowchart illustrating an example of the flow of the processing of determining whether the cleaning of the dispensing nozzle using the detergent is normally performed. FIG. 7 illustrates a flowchart for determining, based on the capacitance signal, whether the cleaning of the dispensing nozzle 202 using the detergent is normally performed, and whether the detergent is removed from the interior of the dispensing nozzle 202.

As described above, the cleaning using the detergent such as ultrasonic cleaning is started at any timing during analysis (S12). The control unit 129 starts recording the capacitance signal Cs (S13). During the analysis, as described above, cleaning by ultrasonic cleaning is performed depending on a state of the dispensing nozzle 202. The dispensing mechanism causes the dispensing nozzle 202 to aspirate the liquid used in the ultrasonic cleaning (S14), and the dispensing nozzle 202 is moved to a position of the dispensing nozzle cleaning mechanism. The dispensing nozzle cleaning mechanism performs external cleaning and internal cleaning of the dispensing nozzle 202 (S15). The control unit 129 ends the recording of the capacitance signal Cs after the end of the cleaning, and the calculation unit 130 calculates a statistical distance using a capacitance signal waveform during the cleaning (S16).

The determination unit 132 first performs a threshold determination for the statistical distance of the capacitance in the interval b, which is a time interval during which the detergent component is being discharged from the dispensing nozzle 202 (S17). Here, the threshold is a lower limit value of the statistical distance corresponding to a peak of the capacitance when the cleaning is performed at an appropriate detergent concentration. When the statistical distance of the acquired capacitance falls below the threshold, an abnormality is determined (S17: abnormality). In this case, there is a possibility that cleaning cannot be normally performed due to insufficient detergent concentration. Therefore, when the abnormality determination is the first time (S18: Yes), the processing returns to S13, and the dispensing nozzle cleaning mechanism again performs the cleaning operation of aspirating the detergent into the dispensing nozzle 202 to perform the external cleaning and the internal cleaning. The control unit 129 records the capacitance signal Cs during the cleaning operation.

On the other hand, when the abnormality determination is not the first time but a second time or more (S18: No), the control unit 129 records the capacitance signal Cs again (S19) and changes the determination of the interval b to no abnormality (S20). When the determination of the interval b is changed to no abnormality, it is determined that there is no abnormality in the next threshold determination in S17. Thereafter, by additionally performing the external cleaning and the internal cleaning using the dispensing nozzle cleaning mechanism in S15, cleaning using a detergent having a normal concentration is considered to be performed.

When it is determined that there is no abnormality in the threshold determination of the interval b (S17: no abnormality), the determination unit 132 performs a threshold determination for the statistical distance of the capacitance in the interval c, which is an interval during which the interior of the dispensing nozzle 202 is being replaced with system water and the system water is being discharged from the dispensing nozzle 202 (S21). Here, the threshold is an upper limit value of the statistical distance corresponding to the capacitance signal Cs when the dispensing nozzle 202 is appropriately cleaned and is not contaminated. When the statistical distance of the acquired capacitance in the interval c is equal to or less than the threshold, it is determined that there is no abnormality, and when the statistical distance exceeds the threshold, it is determined that an abnormality is detected.

When it is determined that there is no abnormality in the threshold determination in the interval c in S21 (S21: no abnormality), there is no remaining liquid such as a detergent in the interior of the dispensing nozzle 202 and the replacement with the system water is completed, so that the dispensing operation of the next specimen is started (S22).

On the other hand, when an abnormality is detected in the threshold determination in the interval c in S21 (S21: abnormality), there is a possibility that the detergent component remains inside the dispensing nozzle 202. Therefore, when the abnormality determination is the first time (S23: Yes), the control unit 129 records the capacitance signal Cs again (S24), and the dispensing nozzle cleaning mechanism additionally performs the internal cleaning and the external cleaning of the dispensing nozzle 202 (S15). Accordingly, a residual component in the interior of the dispensing nozzle 202 is cleaned away. When the abnormality determination in the interval c is for second time (S23: No), it is estimated that the detergent component and the specimen component in the interior of the dispensing nozzle 202 are not removed due to clogging in the interior of the dispensing nozzle 202 or the like. Therefore, the control unit 129 controls the output unit 128 to display an alarm for a target dispensing nozzle (S25), and stops the dispensing operation (S26).

### <Flow of Processing of Determining Whether Cleaning of Dispensing Nozzle Using Water is Normally Performed>

Here, a flow of processing of determining, based on the capacitance signal of the dispensing nozzle, whether cleaning of the dispensing nozzle using water is normally performed will be described.

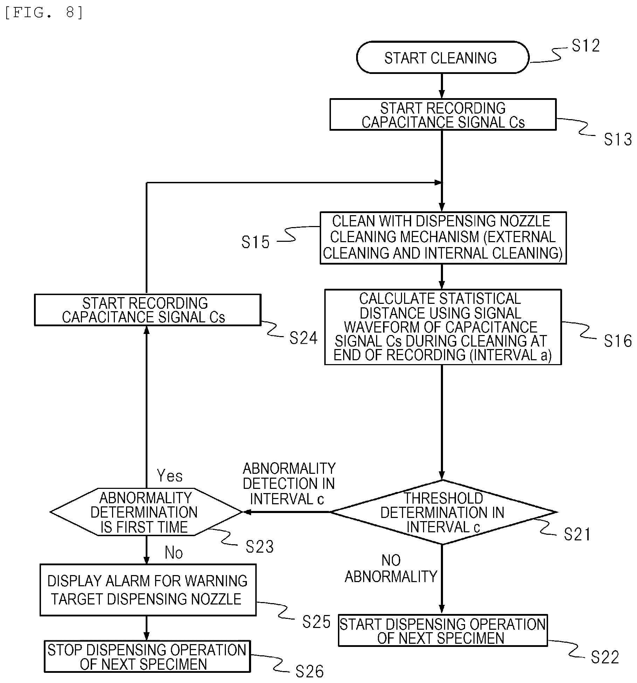

FIG. 8 is a flowchart illustrating an example of the flow of the processing of determining whether the cleaning of the dispensing nozzle using water is normally performed. FIG. 8 illustrates a flowchart for determining, based on the capacitance signal, whether the cleaning of the dispensing nozzle 202 using system water is normally performed, and whether a specimen or a reagent is removed from the interior of the dispensing nozzle 202. In the flowchart in FIG. 8, processing similar to or processing corresponding to the processing in the flowchart in FIG. 7 are denoted by the same reference numerals.

First, cleaning using system water is started (S12). The control unit 129 starts recording the capacitance signal Cs (S13). During the analysis, as described above, the dispensing nozzle 202 is cleaned with the system water. The dispensing mechanism moves the dispensing nozzle 202 to the position of the dispensing nozzle cleaning mechanism. The dispensing nozzle cleaning mechanism performs external cleaning and internal cleaning of the dispensing nozzle 202 with the system water (S15). The control unit 129 ends the recording of the capacitance signal Cs after the end of the cleaning, and the calculation unit 130 calculates a statistical distance using a capacitance signal waveform during the cleaning (S16).

The determination unit 132 performs a threshold determination for the statistical distance of the capacitance in the interval c, which corresponds to the end of the interval a during which the external cleaning and internal cleaning of the dispensing nozzle 202 is being performed (S21). Here, the threshold is an upper limit value of the statistical distance corresponding to a peak of the capacitance when the external cleaning and the internal cleaning are performed and the dispensing nozzle 202 is appropriately cleaned with the system water without contamination. When the statistical distance of the acquired capacitance in the interval c exceeds the threshold, an abnormality is determined (S21: abnormality), and when the statistical distance is equal to or less than the threshold, no abnormality is determined (S21: no abnormality).

When it is determined in S21 that there is no abnormality, the control unit 129 starts a dispensing operation of the next specimen (S22).

When it is determined in S21 that an abnormality is detected, there is a possibility that a liquid component such as a specimen or a drug solution remains in the interior of the dispensing nozzle 202 and cleaning is not normally performed. Therefore, when the abnormality determination is the first time (S23: Yes), the processing proceeds to S24, and the control unit 129 starts recording the capacitance signal Cs again during the cleaning operation (S24). The dispensing nozzle cleaning mechanism again performs a cleaning operation of performing the external cleaning and the internal cleaning of the dispensing nozzle 202 (S15).

On the other hand, when the abnormality determination is not the first time but a second time or more (S23: No), the control unit 129 estimates that a specimen component or a drug solution component in the interior of the dispensing nozzle 202 is not removed due to clogging in the interior of the dispensing nozzle 202 or the like. Therefore, the control unit 129 controls the output unit 128 to display an alarm for a target dispensing nozzle (S25), and stops the dispensing operation (S26).

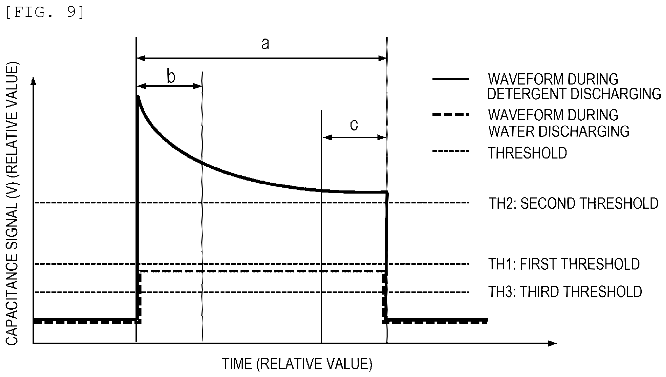

FIG. 9 is a diagram illustrating an example of a plurality of set thresholds. As described above, a plurality of thresholds used in the determination may be set. In FIG. 9, a schematic diagram of the capacitance signal waveform during the cleaning is overlaid with lines of a plurality of thresholds to be set. As the plurality of thresholds, for example, a first threshold TH1, a second threshold TH2, and a third threshold TH3 as illustrated in FIG. 9 are set.

The first threshold value TH1 is an example of a threshold used for threshold determination for a representative value such as a statistical distance or a maximum value of the capacitance signal waveform measured in the interval c, which corresponds to the end of the time interval a from the start to the end of the cleaning of the dispensing nozzle 202 by the external cleaning and the internal cleaning. The first threshold TH1 can be set to a signal value slightly greater than a value of a capacitance signal waveform measured while the dispensing nozzle 202 is discharging water. When the representative value of the capacitance signal waveform of the dispensing nozzle 202 in the interval c exceeds the first threshold TH1, it can be determined that there is a possibility that contamination such as a detergent, a specimen, or a drug solution remains on the dispensing nozzle 202, the conductivity of the dispensing nozzle 202 increases, the capacitance increases.

The second threshold TH2 is an example of a threshold value used for threshold determination for a representative value such as a statistical distance or a minimum value of the capacitance signal waveform measured while cleaning the dispensing nozzle 202 using a detergent. The second threshold TH2 can be set to a signal value that is higher than the first threshold TH1 and slightly smaller than a value of a capacitance signal waveform measured while the dispensing nozzle 202 is discharging the detergent. When the representative value of the capacitance signal waveform of the dispensing nozzle 202 in the interval a or in the initial interval b of the interval a exceeds the second threshold TH2, it can be determined that the liquid aspirated into and discharged by the dispensing nozzle 202 is a detergent, the conductivity of the dispensing nozzle 202 increases, and the capacitance increases.

The third threshold TH3 is an example of a threshold value used for threshold determination for a representative value such as a statistical distance or a minimum value of a capacitance signal waveform measured while cleaning the dispensing nozzle 202 using a detergent or using water only. The third threshold TH3 can be set to a signal value smaller than the value of the capacitance signal waveform measured while the dispensing nozzle 202 is discharging water. When the representative value of the capacitance signal waveform of the dispensing nozzle 202 in the interval a or in the final interval c of the interval a is lower than the third threshold TH3, it can be determined that an insulating material such as silicone adheres to the outer wall of the dispensing nozzle 202, the conductivity of the dispensing nozzle 202 decreases, and the capacitance decreases.

In the actual cleaning flow of the dispensing nozzle 202, for example, when the representative value of the capacitance signal waveform of the dispensing nozzle 202 exceeds the first threshold TH1, additional cleaning by the dispensing nozzle cleaning mechanism is performed as in S15 in FIGS. 7 and 8, but when the representative value exceeds the second threshold TH2, powerful ultrasonic cleaning may be performed during the additional cleaning. For example, when the measured capacitance signal value is lower than the third threshold TH3 compared with a normal waveform of the capacitance during cleaning using water, it may be determined that an insulating material adheres to the outer wall of the dispensing nozzle 202, and powerful cleaning may be performed using the dispensing nozzle 202.

The capacitance waveform during cleaning may vary depending on the type of the used detergent and the volume of the detergent held in the interior of the dispensing nozzle 202 during cleaning the dispensing nozzle 202. Therefore, the interval b and the interval c can be freely set. In addition, the capacitance waveform also changes depending on a syringe attachment, an altitude, and a supply water temperature. Therefore, by calibrating the reference waveform using a detergent having a constant concentration when installing the device or when registering detergent items, false detections can be prevented. In this case, it is desirable to have a reference waveform according to an amount of aspiration to be performed during cleaning. The interval from which a feature is extracted is not limited to the illustrated interval b and interval c, as long as it is within the range of the interval a during which cleaning is being performed, and a width and the number of intervals used in the determination can be set freely depending on characteristics of the waveform.

As described above, the electrical property of the dispensing nozzle 202 changes according to the state related to the cleaning of the dispensing nozzle 202, for example, a liquid in the interior of the dispensing nozzle 202, a foreign matter adhering to the outer wall, or an insulating material, and the change appears as a change in capacitance between the dispensing nozzle 202 and the reference potential portion. Therefore, the determination unit 132 can determine, based on a magnitude of a value corresponding to the maximum value of the spike waveform in the temporal change of the capacitance represented by the capacitance data, the type, the concentration, or the volume of the liquid aspirated by the dispensing nozzle 202. The determination unit 132 can also determine, based on the magnitude of the value corresponding to the minimum value of the spike waveform in the temporal change of the capacitance represented by the capacitance data, whether the liquid aspirated by the dispensing nozzle 202 is removed. Further, the determination unit 132 can also determine, based on a magnitude of a value corresponding to an area of the spike waveform in the temporal change of the capacitance represented by the capacitance data, the type, the concentration, or the volume of the liquid aspirated by the dispensing nozzle 202.

The above describes a method that focuses on the capacitance signal during cleaning by the dispensing nozzle cleaning mechanism. Since the internal cleaning is performed using a high-pressure gear pump, a force with which the liquid is discharged increases. Therefore, when a detergent aspiration amount is very small and the concentration is low, a width of the peak waveform appearing in the interval b, that is, the spike waveform becomes small and may be indistinguishable from noise. Therefore, it is also conceivable that instead of using the gear pump to perform the internal cleaning, a liquid, for example, a probe cleaner, can be pushed and injected into the interior of the dispensing nozzle by a syringe operation. Accordingly, the influence of noise can be reduced by increasing a discharging time of the liquid and securing the width of the peak waveform of the capacitance signal, that is, the spike waveform.

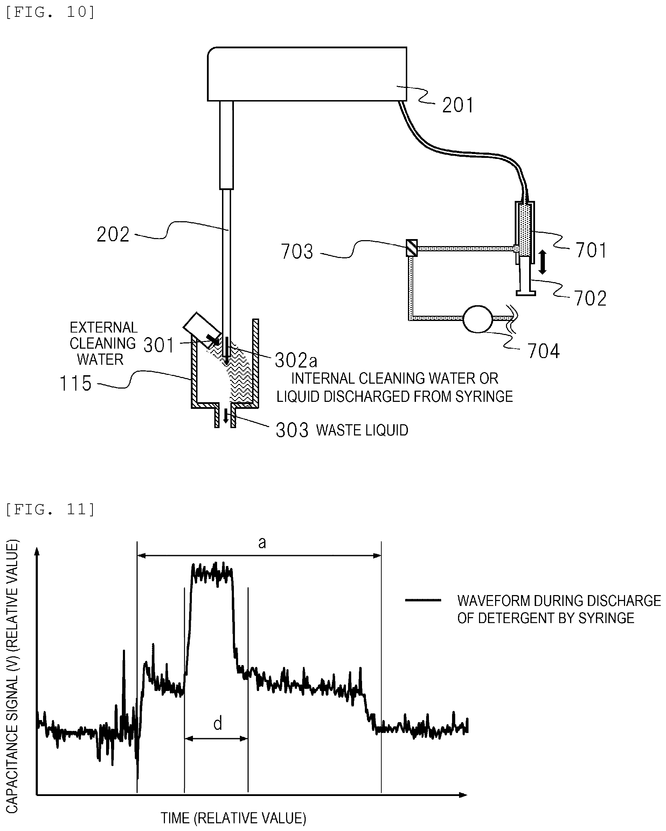

FIG. 10 is a diagram illustrating an example of a flow path configuration of the dispensing mechanism. As illustrated in FIG. 10, the dispensing nozzle 202 is connected to a flow path in the arm 201, and the flow path is connected to a syringe 701. The syringe is connected to a gear pump 704 via a solenoid valve 703, and during the internal cleaning, system water is discharged from the dispensing nozzle at high pressure by opening the solenoid valve. When a plunger 702 of the syringe operates with the solenoid valve closed, the dispensing mechanism performs liquid aspiration and discharging operations.

FIG. 11 is a diagram illustrating an example of a capacitance signal waveform when a detergent is discharged by a syringe operation without performing internal cleaning during cleaning by the dispensing nozzle cleaning mechanism. The external cleaning is performed during the cleaning (interval a) as is. During the syringe operation (interval d), the capacitance signal increases. A feature of the capacitance signal in the interval d is that the peak width is broader than that when the internal cleaning is performed (interval b in FIG. 5), so that determination is possible without being affected by noise even when the concentration of the detergent is low.

As described above, the present example describes the method for determining whether the detergent is aspirated. However, when the specimen or reagent is conductive, the capacitance signal during cleaning deviates from the capacitance signal during system water discharging. Therefore, the above determination can be performed even when the liquid is other than the detergent.

For example, when a conductive specimen or sample remains in the interior of the dispensing nozzle, it is necessary to determine whether the interior of the dispensing nozzle is completely replaced with system water in order to prevent carryover. Therefore, the carryover can be prevented by determining, based on the capacitance signal during the cleaning operation immediately before measuring the next specimen and reagent, whether the interior of the dispensing nozzle is replaced with system water, using a signal in the range corresponding to the interval c in FIG. 3. When it is determined that the replacement with the system water is not sufficient, waste of the specimen and the reagent can be prevented by performing additional cleaning. Also in this case, by providing a plurality of thresholds, the cleaning method according to the state of the interior of the dispensing nozzle can be switched, such as performing a cleaning method having a higher cleaning capability, depending on a remaining degree of the liquid in the interior of the dispensing nozzle. In the flowchart, the determination when the detergent is used is described, but this is a normal analysis procedure. Even when the detergent is not used, the internal contamination state can be determined by focusing on the waveform during the internal cleaning (see step S15 and subsequent steps illustrated in the flowchart in FIG. 5). By performing the cleaning using the detergent only when the abnormality is detected, cleaning can be performed according to the contamination state, and an amount of the consumed detergent can be reduced.

As described above, since the conductive specimen or liquid in the interior of the dispensing nozzle can be detected by using the capacitance signal, the clogging state of the dispensing nozzle can be grasped. For example, a blood collection tube is centrifuged to separate a serum layer used in analysis from a blood clot layer not used in analysis. A separating agent, such as silicone oil, is held between the serum layer and the clot layer to prevent them from mixing. When the dispensing nozzle goes down to the separating agent beyond the serum layer during dispensing, the separating agent may clog the interior of the dispensing nozzle. When the clogging occurs, a pressure during the aspiration changes, and thus the device determines an abnormality by detection using a pressure sensor. Thereafter, the clogging is removed by performing ultrasonic cleaning or the like. The removal of the clogging is determined by the pressure sensor, but when a small amount of the separating agent remains in the dispensing nozzle, the pressure change is not sufficient, and the determination by the pressure sensor may not be possible. Therefore, by simultaneously performing the determination focusing on the capacitance, whether the separating agent in the dispensing nozzle is removed can be more reliably determined.

After the clogging removal operation of the dispensing nozzle is performed, the detergent is aspirated by the dispensing nozzle. Thereafter, dispensing nozzle cleaning is performed in a cleaning tank. It is estimated that under a condition such as a half clogging in which a small amount of the separating agent is present in the interior of the dispensing nozzle, since a flow velocity of the liquid discharged from the dispensing nozzle changes, the capacitance signal deviates compared to a case where there is no clogging. For example, it is estimated that when the internal cleaning operation is performed, the peak width of the capacitance in the interval b in FIG. 3 increases or a slope when the peak decreases becomes gentle. In addition, when the detergent is discharged not by the internal cleaning operation but by the syringe operation, a difference in flow velocity is further emphasized, the deviation of the capacitance signal becomes noticeable, and the determination becomes easier. While the above describes the clogging caused by the separating agent, an abnormality in the interior of the dispensing nozzle, such as clogging caused by a dried and condensed reagent can also be detected.

Although the determination focusing on the interior of the dispensing nozzle is described, when contamination is accumulated on an exterior of the dispensing nozzle, the capacitance of the nozzle itself changes, and thus the capacitance also changes. For example, when the dispensing nozzle comes into contact with the separating agent during the specimen aspiration, silicone oil having high insulation performance adheres to the outer wall of the dispensing nozzle. Therefore, the change in the capacitance signal during cleaning the dispensing nozzle deviates from the change in capacitance signal when the separating agent does not adhere. As described above, the contamination of the outer wall of the dispensing nozzle can also be detected by focusing on the capacitance signal and comparing the capacitance signal with a preset threshold.

The cleaning operation by the dispensing nozzle cleaning mechanism may be performed between the liquid aspiration and discharging for the purpose of cleaning the tip end portion of the dispensing nozzle, or may be performed after the liquid discharging as described in the example. That is, a timing of the cleaning operation is not limited to a specific timing.

### <Effects of Embodiment>

As described above, according to Embodiment 1 of the invention, a state related to cleaning of a dispensing nozzle in an automatic analyzer can be determined in a shorter time.

For example, according to the automatic analyzer according to Embodiment 1 of the invention, the state related to the cleaning of the dispensing nozzle can be determined based on the capacitance data obtained by one measurement of the capacitance over the time interval during which the dispensing nozzle is being cleaned. Therefore, the state can be determined in an extremely short time, and analysis with high reliability can be performed without reducing a processing speed of the analysis.

According to Embodiment 1 of the invention, by detecting the property of the liquid aspirated by the dispensing nozzle while the cleaning operation of the dispensing nozzle is performed, whether the detergent concentration of the probe cleaner used in cleaning is appropriate and whether there is an abnormality in the probe cleaner delivery flow path can be determined.

According to Embodiment 1 of the invention, the reliability of the measurement result can be improved by determining whether the probe cleaner aspirated by the dispensing nozzle is removed at the end of cleaning.

According to Embodiment 1 of the invention, by detecting the electrical property of the liquid in the interior of the dispensing nozzle, it is possible to ensure that the probe cleaner used in the cleaning is normal and the probe cleaner used in the cleaning is removed at the end of the cleaning in addition to the absence of an abnormality in the supply flow path of the probe cleaner, and to improve the reliability of the measurement result of the automatic analyzer.

Further, according to Embodiment 1 of the invention, an abnormality in the flow path of the liquid can be detected based on the capacitance data measured during the cleaning. Therefore, according to the automatic analyzer, it is not necessary to newly provide a measurement unit for measuring the conductivity or the like in the flow path in order to detect the flow path abnormality, which contributes to the miniaturization of the automatic analyzer.

### (Embodiment 2)

Hereinafter, Embodiment 2 of the invention will be described. A method described below is also an embodiment of the invention.

The method is a dispensing nozzle cleaning state determination method including: causing a dispensing nozzle in an automatic analyzer to aspirate a liquid; cleaning the dispensing nozzle by supplying a probe cleaner to an outer wall of the dispensing nozzle and delivering the probe cleaner into an interior of the dispensing nozzle after or while discharging the liquid aspirated into the dispensing nozzle; measuring capacitance between the dispensing nozzle and a reference potential portion over a time interval including a period during which the dispensing nozzle is being cleaned; and determining a state related to cleaning of the dispensing nozzle based on the measured capacitance.

By executing such a dispensing nozzle cleaning state determination method, the automatic analyzer can determine a state related to the cleaning of the dispensing nozzle only by acquiring the capacitance data of the dispensing nozzle once, and can determine the state related to the cleaning of the dispensing nozzle in a shorter time. According to the method, effects same as the various effects according to Embodiment 1 described above can be obtained.

### (Embodiment 3)

Hereinafter, Embodiment 3 of the invention will be described. A program described below is also an embodiment of the invention.

The program is a program for causing one or more computers to function as the signal processing unit 127 of the above-described automatic analyzer 100. Alternatively, the program is a program for causing one or more computers to execute: processing of causing a dispensing nozzle in an automatic analyzer to aspirate a liquid; processing of cleaning the dispensing nozzle by supplying a probe cleaner to an outer wall of the dispensing nozzle and delivering the probe cleaner into an interior of the dispensing nozzle after or while discharging the liquid aspirated into the dispensing nozzle; processing of measuring capacitance between the dispensing nozzle and a reference potential portion over a time interval including a period during which the dispensing nozzle is being cleaned; and processing of determining a state related to cleaning of the dispensing nozzle based on the measured capacitance.

A non-transitory computer-readable storage medium storing such a program is also an embodiment of the invention.

The computer functions as the signal processing unit 127 of the automatic analyzer 100 by reading and executing such a program from a predetermined storage unit or storage medium, and can determine a state related to the cleaning of the dispensing nozzle only by acquiring the capacitance data of the dispensing nozzle 202 once, and can determine the state related to the cleaning of the dispensing nozzle 202 in a shorter time. Further, according to the program and the storage medium, effects same as the various effects according to Embodiment 1 described above are achieved.

Although the embodiment of the invention has been described above, the invention is not limited to the embodiment described above, and various modifications can be made without departing from the gist of the invention. For example, in one embodiment, one component may be added, omitted, or replaced with another component. The numerical values and the names of the respective units described in the above embodiments are also merely examples, and the invention is not limited thereto.

### Reference Signs List

101 specimen inlet
102 conveyance line
103, 104 specimen dispensing mechanism
105 reaction disk
106 reaction container
107, 108, 109, 110 reagent dispensing mechanism
111 reagent bottle
112 reagent disk
113 stirring mechanism
114 photometry mechanism
115, 116 specimen dispensing nozzle cleaning mechanism
117, 118, 119, 120 reagent dispensing nozzle cleaning mechanism
121 reaction container cleaning mechanism
122 ultrasonic cleaning mechanism
123 light source
124 photodetector
125 detection unit
126 input unit
127 signal processing unit
128 output unit
129 control unit
130 calculation unit
131 storage unit
132 determination unit
133 specimen container
134 rack
200 dispensing mechanism
201 arm
202 dispensing nozzle
203 container
204 specimen
205 flow path
701 syringe
702 plunger
703 solenoid valve
704 gear pump

## Claims

1. An automatic analyzer comprising:
a dispensing nozzle configured to aspirate and discharge a liquid;
a cleaning unit configured to supply a probe cleaner onto an outer wall and into an interior of the dispensing nozzle;
a capacitance measurement unit configured to measure capacitance between the dispensing nozzle and a reference potential portion;
a control unit configured to control the dispensing nozzle and the cleaning unit; and
a determination unit configured to execute a determination based on the measured capacitance, wherein
the capacitance measurement unit measures the capacitance over a time interval including a state where the cleaning unit is supplying the probe cleaner to the outer wall and the interior of the dispensing nozzle and the dispensing nozzle is discharging the aspirated liquid, and
the determination unit determines a state related to cleaning of the dispensing nozzle based on capacitance data representing the capacitance measured over the time interval.

2. The automatic analyzer according to claim 1, wherein
the control unit causes the dispensing nozzle to aspirate the liquid and then discharge the liquid,
the capacitance measurement unit measures the capacitance over the time interval including the state where the cleaning unit is supplying the probe cleaner to the outer wall and the interior of the dispensing nozzle and the dispensing nozzle is discharging the aspirated liquid, and
the determination unit determines, based on the capacitance data representing the capacitance measured over the time interval, whether the liquid is removed from the interior of the dispensing nozzle.

3. The automatic analyzer according to claim 1, further comprising:
a container disposed at a position accessible by the dispensing nozzle; and
a flow path configured to allow the liquid to be supplied into the container, wherein
the control unit causes the dispensing nozzle to aspirate the liquid supplied into the container through the flow path and then discharge the liquid,
the capacitance measurement unit measures the capacitance over the time interval including the state where the cleaning unit is supplying the probe cleaner to the outer wall and the interior of the dispensing nozzle and the dispensing nozzle is discharging the aspirated liquid, and
the determination unit determines, based on the capacitance data representing the capacitance measured over the time interval, whether the liquid is removed from the interior of the dispensing nozzle.

4. The automatic analyzer according to claim 3, wherein
the control unit determines whether a state of the flow path is abnormal based on the capacitance data.

5. The automatic analyzer according to claim 2, wherein
the control unit causes the cleaning unit to additionally supply the probe cleaner to the dispensing nozzle when the determination unit determines that the liquid is not removed from the interior of the dispensing nozzle.

6. The automatic analyzer according to claim 2, wherein
the cleaning unit has a functionality to perform cleaning more powerful than supply of the probe cleaner, and
the control unit causes the cleaning unit to perform the powerful cleaning of the dispensing nozzle when the determination unit determines that the liquid is not removed from the interior of the dispensing nozzle.

7. The automatic analyzer according to claim 6, wherein
the powerful cleaning is ultrasonic cleaning.

8. The automatic analyzer according to claim 1, wherein
the cleaning unit supplies the probe cleaner into the interior of the dispensing nozzle via injection through a syringe operation, and
the capacitance measurement unit measures the capacitance over a time interval during which the dispensing nozzle is discharging the aspirated liquid due to the injection of the probe cleaner through the syringe operation by the cleaning unit.

9. The automatic analyzer according to claim 1, wherein
the liquid is a specimen, and
the probe cleaner is water.

10. The automatic analyzer according to claim 1, wherein
the liquid is a detergent, and
the probe cleaner is water.

11. The automatic analyzer according to claim 1, wherein
the determination unit determines a type, a concentration, or a volume of the liquid based on a magnitude of a value corresponding to a maximum value of a spike waveform in a temporal change of the capacitance represented by the capacitance data.

12. The automatic analyzer according to claim 1, wherein
the determination unit determines, based on a magnitude of a value corresponding to a minimum value of a spike waveform in a temporal change of the capacitance represented by the capacitance data, whether the liquid is removed.

13. The automatic analyzer according to claim 1, wherein
the determination unit determines a type, a concentration, or a volume of the liquid based on a magnitude of a value corresponding to an area of a spike waveform in a temporal change of the capacitance represented by the capacitance data.

14. A dispensing nozzle cleaning state determination method comprising:
causing a dispensing nozzle in an automatic analyzer to aspirate a liquid;
cleaning the dispensing nozzle by supplying a probe cleaner to an outer wall of the dispensing nozzle and delivering the probe cleaner into an interior of the dispensing nozzle after or while discharging the liquid aspirated into the dispensing nozzle;
measuring capacitance between the dispensing nozzle and a reference potential portion over a time interval including a period during which the dispensing nozzle is being cleaned; and
determining a state related to cleaning of the dispensing nozzle based on the measured capacitance.

15. A program for causing a computer to execute:
processing of causing a dispensing nozzle in an automatic analyzer to aspirate a liquid;
processing of cleaning the dispensing nozzle by supplying a probe cleaner to an outer wall of the dispensing nozzle and delivering the probe cleaner into an interior of the dispensing nozzle after or while discharging the liquid aspirated into the dispensing nozzle;
processing of measuring capacitance between the dispensing nozzle and a reference potential portion over a time interval including a period during which the dispensing nozzle is being cleaned; and
processing of determining a state related to cleaning of the dispensing nozzle based on the measured capacitance.
